Europäisches Patentamt

European Patent Office

Office européen des brevets

(19)

(11) Veröffentlichungsnummer : **0 185 289**
**B1**

(12) # EUROPÄISCHE PATENTSCHRIFT

(45) Veröffentlichungstag der Patentschrift :
27.07.88

(51) Int. Cl.⁴ : $G 11 B \ 5/31$

(21) Anmeldenummer : 85115662.0

(22) Anmeldetag : 09.12.85

(54) Dünnfilm-Magnetkopf auf einem nicht-magnetischen Substrat zur senkrechten Magnetisierung.

(30) Priorität : 21.12.84 DE 3446996

(43) Veröffentlichungstag der Anmeldung :
25.06.86 Patentblatt 86/26

(45) Bekanntmachung des Hinweises auf die Patenterteilung : 27.07.88 Patentblatt 88/30

(84) Benannte Vertragsstaaten :
AT CH DE FR GB IT LI NL SE

(56) Entgegenhaltungen :
EP-A- 0 032 230
DE-A- 2 522 861
GB-A- 2 058 436

(73) Patentinhaber : Siemens Aktiengesellschaft Berlin
und München
Wittelsbacherplatz 2
D-8000 München 2 (DE)

(72) Erfinder : Diepers, Heinrich, Dr.
Veit-Stoss-Strasse 44
D-8552 Höchstadt/A. (DE)

## Beschreibung

Die Erfindung bezieht sich auf einen Dünnfilm-Magnetkopf für ein senkrecht (vertikal) zu magnetisierendes Aufzeichnungsmedium mit einem den magnetischen Fluß führenden, auf einem nicht-magnetischen Substrat aufgebrachten magnetischen Leitkörper, der ringkopfähnliche Gestalt hat und zwei Magnetschenkel enthält, deren dem Aufzeichnungsmedium zugewandten Polendstücke in Bewegungsrichtung des Kopfes gesehen hintereinander und mit vorbestimmter geringer Spaltweite zueinander angeordnet sind und die gegenüber der Spaltweite weiter beabstandete Schenkelteile aufweisen, die einen Zwischenraum begrenzen, durch welchen sich die Windungen einer Schreib-/Lesespulenwicklung erstrecken. Ein solcher Magnetkopf ist z. B. der EP-0 012 912 Al zu entnehmen.

Das Prinzip der senkrechten Magnetisierung zur Speicherung von Informationen in allgemein bekannt (vgl. z. B. « IEEE Transactions on Magnetics », vol. MAG-16, no. 1, Januar 1980, Seiten 71 bis 76). Für dieses Prinzip, das vielfach auch als vertikale Magnetisierung bezeichnet wird, sind besondere Aufzeichnungsmedien in Form von starren Magnetspeicherplatten, flexiblen Einzelplatten (Floppy discs) oder Magnetbändern erforderlich. Ein entsprechendes Aufzeichnungsmedium weist mindestens eine magnetisierbare Speicherschicht vorbestimmter Dicke auf, welche ein magnetisch anisotropes Material, insbesondere aus einer CoCr-Legierung, enthält. Dabei ist die Achse der sogenannten leichten Magnetisierung dieser Schicht senkrecht zur Oberfläche des Mediums gerichtet. Mittels eines speziellen Magnetkopfes können dann längs einer Spur die einzelnen Informationen als Bits in aufeinanderfolgenden Abschnitten, auch Zellen oder Blöcke genannt, durch entsprechende Magnetisierung der Speicherschicht eingeschrieben werden. Die Bits haben dabei eine vorbestimmte, auch als Wellenlänge bezeichnete Ausdehnung in Längsrichtung der Spur. Diese Ausdehnung kann im Vergleich zu der Grenze, die bei einer Speicherung nach dem Prinzip einer longitudinalen (horizontalen) Magnetisierung durch die Entmagnetisierung gegeben ist, wesentlich kleiner sein. Somit läßt sich durch senkrechte Magnetisierung die Informationsdichte in den Aufzeichnungsmedien entsprechend vergrößern.

Die für das Prinzip der longitudinalen Magnetisierung bekannten Schreib- und Lese-Magnetköpfe, d. h. Köpfe, mit denen sowohl die Schreib- als auch die Lesefunktion auszuüben ist, können jedoch nicht ohne weiteres für eine senkrechte Magnetisierung übernommen werden. Bei Verwendung dieser Köpfe, die im allgemeinen ringkopfähnliche Gestalt haben, läßt sich zwar die auch bei dem Prinzip der senkrechten Magnetisierung angestrebte Flußführung zu einem möglichst geschlossenen Kreis mit geringem magnetischen Widerstand erreichen. Jedoch ist es schwierig, bei hohen Bit-Dichten und entsprechend kleiner Spaltweite des Ringkopfes ein hinreichend starkes Schreibfeld in vertikaler Richtung zu erzeugen.

Man sieht sich deshalb veranlaßt, für dieses Prinzip der senkrechten Magnetisierung spezielle Schreib-/Lese-Magnetköpfe zu entwickeln. Ein hierfür geeigneter Magnetkopf, wie er z. B. aus der eingangs genannten EP-Al zu entnehmen ist, weist zur Führung des magnetischen Flusses einen auf einem ebenen nicht-magnetischen Substrat aufgebrachten magnetischen Leitkörper mit insbesondere ringkopfähnlicher Gestalt auf. Dieser aus einem magnetisierbaren Material bestehende Leitkörper umfaßt zwei Magnetschenkel, deren dem Aufzeichnungsmedium zugewandte Polendstücke in Bewegungsrichtung des Kopfes gesehen hintereinander und mit vorbestimmtem geringen Abstand, auch Spaltweite genannt, zueinander angeordnet sind. An den Bereich der Polendstücke schließt sich ein Bereich des Kopfes an, in dem die Magnetschenkel auf einen größeren gegenseitigen Abstand geführt sind. Auf diese Weise ergibt sich zwischen den beiden Magnetschenkeln ein ausreichend weiter Zwischenraum, durch welchen sich die Windungen einer Schreib- und Lesespulenwicklung erstrecken. Sowohl für die Schreibfunktion als auch für die Lesefunktion des Magnetkopfes wird die ringkopfähnliche Gestalt des Leitkörpers ausgenutzt.

Die einzelnen Teile dieses Magnetkopfes sind dabei in Dünnfilm-Technik auf einem ebenen Substrat aufgebracht. Diese Technik ist für Schreib-/Lese-Köpfe allgemein bekannt (vgl. z. B. « Feinwerktechnik und Meßtechnik », 88. Jahrgang, Heft 2, März 1980, Seiten 53 bis 59 oder « Siemens-Zeitschrift », Band 52, Heft 7, 1978, Seiten 434 bis 437).

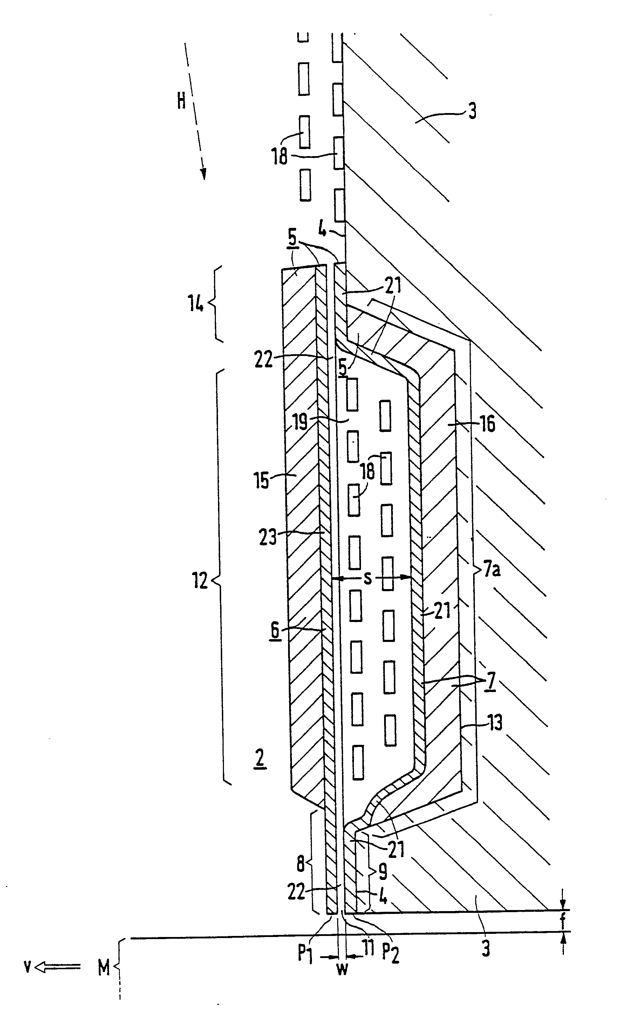

Gemäß dieser Technik werden Dünnfilm-Magnetköpfe dadurch hergestellt, daß man auf ein ebenes Substrat eine Folge zahlreicher Schichten aus magnetischem Material wie z. B. Nife, aus Isolationsmaterial wie z. B. $SiO_2$ sowie Lacken und elektrisch leitendem Material wie z. B. Kupfer aufbringt. Die gewünschte geometrische Formgebung dieser Schichten, wie z. B. die Ausformung einer flachen Anordnung einer Spulenwindung zur Erzeugung einer Schreib-/Lesespulenwicklung wird beispielsweise durch fotolithographische Prozesse erreicht, indem zunächst Lackschichten aufgebracht, über Masken belichtet und dann chemisch strukturiert werden. Danach wird die erhaltene Struktur durch rein chemische Ätzverfahren oder durch Plasmaätzverfahren in die zu strukturierende Metall- oder Isolationsschicht übertragen. Da diese Schichten aufeinander aufzubringen und zu strukturieren sind, ergeben sich je nach Kopfgestalt Gesamthöhen von 10 bis 20 $\mu$m und mehr. Mit zunehmender Schichtzahl wird jedoch die Strukturierung ungenauer, wobei die Positionierungsgenauigkeit der jeweils letzten Maske zur untersten strukturierten Schicht abnimmt. Dies ist auch der Fall, wenn die aufeinanderfolgenden Masken jeweils zur ersten, untersten Struktur justiert werden, und zwar aufgrund der Justiertoleranzen und der sich stetig ändernden, wenn auch teilweise noch korrigierbaren Abbildungsbedingungen von Lage zu Lage. Dies trifft vor allem bei dem wegen seiner sonstigen hohen Abbildungstreue und der Möglichkeit der Abbildung feinster Strukturen im μm-Bereich allgemein verwendeten, sogenannten Hart-Kontakt-Verfahren zu, bei dem die Maske in direktem Kontakt mit der Lackschicht auf dem Substrat ist (vgl. z. B. « Introduction to Microlithography », ACS Symposium Series 219, Washington, 1983, insbesondere Seiten 18 und 19). Zur Herstellung des aus der genannten EP-AI zu entnehmenden Magnetkopfes sind die letzten Arbeitsschritte, nämlich das Strukturieren des äußeren, von dem Substrat weiter entfernt liegenden Magnetschenkels, der in das schmale schreibende oder lesende Polendstück von z. B. 5 bis 50 μm Breite mündet, besonders schwierig, da dies aus einer Höhe von etwa 10 μm und mehr erfolgen muß ; denn die für die Strukturierung erforderliche Maske wird stets auf den höchsten Punkten aufgelegt. Dies führt an diesem besonders kritischen Punkt zu Unschärfen, unerwünschten Strukturabweichungen und zu geringer Reproduzierbarkeit bzw, entsprechend großem Ausschuß.

Ein weiteres Problem ergibt sich dadurch, daß der untere, d. h. dem Substrat zugewandte Magnetschenkel bis auf sein schmales als Schreib/Lesespitze dienendes Polendstück durch eine zusätzliche, einige Mikrometer starke Schicht aus magnetischem Material verstärkt ist, um so den magnetischen Widerstand im Magnetkreis des magnetischen Leitkörpers zu reduzieren und damit den Wirkungsgrad des gesamten Magnetkopfes zu erhöhen. Für den bekannten Magnetkopf wird es deshalb als günstig angesehen, diese weitere verstärkende Magnetschicht möglichst nahe an die Magnetkopfspitze bzw. das entsprechende Polendstück heranzuführen. Damit ist jedoch die Gefahr verbunden, daß zwischen der vorderen Kante der weiteren Magnetschicht und dem äußeren, oberen Magnetschenkel magnetische Flußlinien kurzgeschlossen werden und folglich nicht über die beiden als Schreib-/Leseschenkelspitzen dienenden Polendstücke austreten und geführt werden, wie es wünschenswert wäre.

Aufgabe der vorliegenden Erfindung ist es deshalb, den eingangs genannten Magnetkopf dahingehend zu verbessern, daß er auf verhältnismäßig einfache Weise mit guter Reproduzierbarkeit herzustellen ist, wobei unzulässige Strukturabweichungen weitgehend ausgeschlossen sind. Außerdem soll ein verhältnismäßig hoher Wirkungsgrad sowohl für die Schreib- als auch Lesefunktion zu gewährleisten sein.

Diese Aufgabe wird erfindungsgemäß mit den im Kennzeichen des Hauptanspruchs angegebenen Merkmalen gelöst.

Bei dem erfindungsgemäßen Magnetkopf sind dessen Schichten somit nicht mehr auf einem ebenen Substrat aufeinanderliegend aufgebracht ; sondern der überwiegende Teil des gesamten Magnetkopfes ist in einer Vertiefung in dem Substrat eingebettet, und zwar so, daß die für die Schreib- und Lesefunktion erforderlichen Polendstücke in bekannter Weise unmittelbar auf der Substratoberfläche aufliegen. Dieser Aufbau hat insbesondere den Vorteil, daß ein für die Mikrostrukturierung insbesondere des Polendstückes des äußeren, von dem Substrat weiter entfernten Magnetschenkels ungünstig hoher Kopfaufbau zumindest weitgehend vermieden wird und somit die beiden Polendstücke mit hoher Präzision belackt und in einem hochauflösenden Maskenverfahren strukturiert werden können. Außerdem wird die Gefahr eines magnetischen Kurzschlusses durch den unteren, dem Substrat zugewandten Magnetschenkel aufgrund dessen magnetischer Verstärkungsschicht dadurch vermieden, daß nunmehr die Verstärkungen der Magnetschenkel jeweils auf der Außenseite dieser Schenkel liegen können. Magnetschenkel und Verstärkungsschichten bilden dabei gemeinsam den magnetischen Leitkörper.

Vorteilhafte Ausgestaltungen des Magnetkopfes nach der Erfindung gehen aus den einzelnen Unteransprüchen hervor.

Zur weiteren Erläuterung der Erfindung wird nachfolgend auf die Zeichnung Bezug genommen, in deren Figur ein Ausführungsbeispiel eines erfindungsgemäßen Magnetkopfes als Längsschnitt schematisch veranschaulicht ist.

Bei dem in der Figur nur teilweise ausgeführten Magnetkopf zum Schreiben und Lesen wird von an sich bekannten ringkopfähnlichen Ausführungsformen mit in Dünnfilm-Technik erstelltem, schichtweisem Aufbau für das Prinzip der senkrechten (vertikalen) Magnetisierung ausgegangen (vgl. z. B. die genannte EP-AI oder die EP-0 071 489 A2). Der in der Figur allgemein mit 2 bezeichnete Kopf wird von einem Substrat 3 getragen, das die Stirn- oder Rückseite eines gebräuchlichen als Flugkörper bezeichneten Elementes bildet, welches in der Figur nicht näher ausgeführt ist und dessen Oberflächenebene mit 4 bezeichnet ist. Dieser Kopf ist relativ zu einem an sich bekannten, vertikal zu magnetisierenden Aufzeichnungsmedium M in geringer Flughöhe f von beispielsweise 0,2 μm zu führen. Die relative Bewegungsrichtung des beispielsweise unter dem Kopf hinweggeführten Aufzeichnungsmediums M bezüglich des Kopfes ist durch eine mit v bezeichnete gepfeilte Linie angedeutet.

Der Magnetkopf 2 enthält einen den magnetischen Fluß führenden, aus einem hierfür geeigneten weichmagnetischen Material bestehenden Leitkörper 5. Dabei soll in diesem Material die sogenannte leichte Magnetisierung stets zumindest weitgehend senkrecht zur Führungsrichtung des magnetischen Flusses gerichtet sein. Der magnetische Leitkörper 5 besteht aus zwei Magnetschenkeln 6 und 7, die weitgehend und insbesondere an ihren dem Aufzeichnungsmedium M zugewandten Polendstücken 8 und 9 zumindest annähernd senkrecht zur Oberfläche des Aufzeichnungsmediums ausgerichtet sind und dort jeweils einen Magnetpol $P_1$ bzw. $P_2$ bilden. Zwischen diesen beiden Polendstücken ist ein Luftspalt 11 mit einer vorteilhaft geringen longitudinalen, d. h. in Bewegungsrichtung v weisenden Weite w von unter 1 $\mu$m, insbesondere von etwa 0,5 $\mu$m ausgebildet. In einem mittleren Bereich 12 des Kopfes 2 ist der Abstand zwischen den beiden Magnetschenkeln 6 und 7 gegenüber dieser Spaltweite w erweitert. Hierzu ist erfindungsgemäß in diesem Bereich das Substrat 3 mit einer wannenartigen Vertiefung 13 versehen, durch welche sich der mit 7a bezeichnete Schenkelteil des Magnetschenkels 7 hindurch erstreckt. Der dem Substrat 3 zugewandte Magnetschenkel 7 führt also mit seinem sich an sein Polendstück 9 anschließenden Schenkelteil 7a auf einen größeren Abstand s bezüglich des äußeren, gerade ausgebildeten und von dem Substrat 3 weiter entfernt liegenden Magnetschenkels 6. Außerhalb des Bereichs 12 auf der dem Aufzeichnungsmedium M abgewandten Seite ist der Magnetschenkel 7 in bekannter Weise in einem Verbindungsbereich 14 an den Magnetschenkel 6 angefügt, so daß sich die ringkopfähnliche Gestalt des Magnetkopfes 2 ergibt.

Wie ferner aus der Figur ersichtlich ist, weisen die beiden Magnetschenkel 6 und 7 bis auf den Bereich ihrer Polendstücke 8 bzw. 9 Verstärkungsschichten 15 bzw. 16 aus magnetisierbarem Material auf, die vorteilhaft die Außenseiten des magnetischen Leitkörpers 5 bilden.

Darüber hinaus enthält der Magnetkopf 2 sowohl für die Lesefunktion als auch für die Schreibfunktion nach dem Prinzip der senkrechten (vertikalen) Magnetisierung eine insbesondere mehrlagige, flache Spulenwicklung 18, deren Windungen sich durch den zwischen den beiden Magnetschenkeln 6 und 7 in dem mittleren Bereich 12 ausgebildeten Zwischenraum 19 erstrecken.

Da der Dünnfilm-Magnetkopf 2 hohe Strombelastungen für die Schreibfunktion verkraften muß, ist eine entsprechend gute Kühlung zu gewährleisten. Dies wird besonders effektiv durch die Einbettung des Kopfes in das Substrat 3 erreicht, da hiermit eine große Kontaktfläche zwischen dem Kopf und dem Substrat geschaffen wird. Als Substratmaterial wird vorzugsweise mit einer $Al_2O_3$-Schicht versehenes TiC (30) verwendet, das 30 % $Al_2O_3$ enthält. Da dieses Material infolge der Titan-Carbid-Komponente elektrisch leitfähig ist, muß das Substrat 3 zusätzlich noch mit einer $Al_2O_3$-Schicht zur Isolation versehen werden. Bevorzugt kann anstelle von TiC auch AlN als Substratmaterial verwendet werden, das eine noch höhere thermische Leitfähigkeit besitzt und zusätzlich elektrisch isoliert.

Für die Herstellung des Magnetkopfes 2 wird zunächst in dem Substrat 3 die Vertiefung 13 dadurch geschaffen, daß durch Ionenstrahlbeschuß oder durch reaktives Ionenätzen an bestimmten Stellen, die durch Maskenöffnungen vorgegeben sind, Substratmaterial abgetragen wird. Danach erfolgt das Aufbringen der 2 bis 3 $\mu$m dicken verstärkenden Magnetschicht 16, z. B. aus NiFe, wobei Aufdampf- oder Sputtertechniken angewandt werden können. Das Magnetmaterial, das dabei außerhalb der Vertiefung 13 auf der Substratoberfläche abgeschieden ist, wird anschließend beispielsweise durch mechanisches Polieren wieder abgetragen. Vorzugsweise erfolgt der Abtrag durch Schägionenbeschuß, wie z. B. in der Veröffentlichung « Ion Bombardement Modification of Surfaces », Elsevier-Verlag, 1984, insbesondere Seiten 372, 373 und 383 veranschaulicht ist. Die entsprechende Einstrahlrichtung bzw. der Winkel sind näherungsweise in der Figur durch einen mit Bezeichneten Pfeil angedeutet. Die bei dem Ionenbeschuß im Übergangsbereich zwischen Teil 9 und Bereich 12 des Magnetkopfes nahezu senkrecht auftreffenden Ionen bewirken einer Verkürzung oder Absenkung der äußeren Magnetschicht 16 an dieser Stelle, während an der gegenüberliegenden Seite im Übergang der Teilbereiche 14 and 12 infolge der Abschattung durch die Substratkante eine solche Abtragung unterbleibt. Danach erfolgt das Aufbringen einer dünnen, den eigentlichen Körper des Magnetschenkels 7 bildenden und mit 21 bezeichneten Magnetschicht von etwa 1 $\mu$m Stärke, und zwar in Sandwich-Technik, d. h. in einer Schichtfolge von Magnetschicht, Isolator und Magnetschicht. Im Übergangsbereich zwischen Teil 9 und Bereich 12 liegt die Magnetschicht 21 unmittelbar an der schrägen Substratoberfläche an, und zwar infolge der erwähnten Absenkung der äußeren Magnetschicht 16. Die Absenkung bewirkt also eine schnelle Distanzgewinnung zwischen den Magnetschichten 21 und 23 mit dem Vorteil, daß die Führung des magnetischen Flusses vorwiegend und verstärkt im Bereich der Polendstücke 8 und 9 erfolgt. Die weiteren Verfahrensschritte dienen dann zur Ausbildung der Windungen der Schreib-/Lesespulenwicklung 18, wobei in mehreren Schrittfolgen Isolationslacke, Kupfer und wiederum Isolationslacke aufgebracht werden. Dabei schließt vorteilhaft die äußerste Lackschicht flächenbündig mit den auf der Ebene 4 der Substratoberfläche außerhalb der Vertiefung 13 abgeschiedenen Teilen der Schicht 21 des Magnetschenkels 7 ab. Anschließend wird eine dünne Isolationsschicht 22 zur gegenseitigen Isolation der beiden Magnetschenkel 6 und 7 insbesondere zur Ausfüllung des Luftspaltes 11 aufgebracht. Diese Schicht aus $SiO_2$ oder $Al_2O_3$ bestehen. Schließlich erfolgt die Herstellung des oberen Magnetschenkels 6 in Form wiederum einer den eigentlichen Körper dieses Schenkels bildenden Sandwich-Schicht 23 aus einer Folge von Magnetschicht, Isolator und Magnetschicht von etwa 1 $\mu$m Stärke und der Verstärkungsschicht 15 von etwa 3 bis 4 $\mu$m Stärke. Hieran schließen sich noch an sich bekannte Verfahrensschritte zur Komplettierung des Magnetkopfes an. In der Figur sind jedoch die für den Aufbau des erfindungsgemäßen Magnetkopfes erforderlichem Isolationsschichten bis auf die Spaltschicht 22 aus Gründen der Übersichtlichkeit nicht ausgeführt.

## Patentansprüche

1. Dünnfilm-Magnetkopf für ein senkrecht (vertikal) zu magnetisierendes Aufzeichnungsmedium mit einem den magnetischen Fluß führenden, auf einem nicht-magnetischen Substrat aufgebrachten magnetischen Leitkörper, der ringkopfähnliche Gestalt hat und zwei Magnetschenkel enthält, deren dem Aufzeichnungsmedium zugewandten Polendstücke in Bewegungsrichtung des Kopfes gesehen hintereinander und mit vorbestimmter geringer Spaltweite zueinander angeordnet sind und die gegenüber der Spaltweite weiter beabstandete Schenkelteile aufweisen, die einen Zwischenraum begrenzen, durch welchen sich die Windungen einer Schreib-/Lesespulenwicklung erstrecken, dadurch gekennzeichnet, daß das Substrat (3) mit einer Vertiefung (13) versehen ist, in welcher zumindest großenteils der gegenüber dem einen Magnetschenkel (6) weiter beabstandete Schenkelteil (7a) des anderen Magnetschenkels (7) sowie die Windungen (18) der Schreib-/Lesespulenwicklung angeordnet sind.

2. Magnetkopf nach Anspruch 1, dadurch gekennzeichnet, daß die beiden Magnetschenkel (6, 7) bis auf den Bereich ihrer Polendstücke (8 bzw. 9) jeweils mit einer magnetischen Verstärkungsschicht (15 bzw. 16) versehen sind, wobei diese Verstärkungsschichten (15, 16) die entsprechenden Außenseiten des magnetischen Leitkörpers (5) bilden.

3. Magnetkopf nach Anspruch 1 oder 2, dadurch gekennzeichnet, daß der dem Substrat (3) zugewandte, den durch die Vertiefung (13) verlaufenden Schenkelteil (7a) aufweisende Magnetschenkel (7) zusammen mit den in ein Isolationsmaterial eingebetteten Windungen (18) der Schreib-/Lesespulenwicklung zumindest annähernd eine gemeinsame ebene Außenfläche bilden, auf der über eine Isolationsschicht (22) beabstandet der weitere Magnetschenkel (6) angeordnet ist.

4. Magnetkopf nach einem der Ansprüche 1 bis 3, dadurch gekennzeichnet, daß das Substrat (3) aus $Al_2O_3$-TiC oder AlN besteht.

5. Magnetkopf nach einem der Ansprüche 1 bis 4, dadurch gekennzeichnet, daß sein den Magnetfluß führender magnetischer Leitkörper (5) aus weichmagnetischem Material besteht.

6. Magnetkopf nach einem der Ansprüche 1 bis 5, dadurch gekennzeichnet, daß sein den Magnetfluß führender magnetischer Leitkörper (5) aus einem Material besteht, dessen leichte Magnetisierung zumindest weitgehend senkrecht zur Führungsrichtung des magnetischen Flusses gerichtet ist.

## Claims

1. A thin-film magnetic head for a recording medium, which is to be magnetised perpendicularly (vertically), with a magnetic conductive body which conducts the magnetic flux and is mounted on a non-magnetic substrate, and has a form similar to that of a ring core head and contains two magnetic legs, whose pole end pieces, which are turned towards the recording medium, are seen to be behind each other in the moving direction of the head and are arranged adjacent to each other with a pre-determined small gap between them, and which have leg parts located opposite the gap and further away, which border a space through which the turns of a writing/reading coil winding extend, characterised in that the substrate (3) is provided with a depression (13) in which, broadly, at least the leg part (7a) of the other magnetic leg (7), which lies opposite the one magnetic leg (6) and further away, and the turns (18) of the writing/reading coil winding, are arranged.

2. A magnetic head according to claim 1, characterised in that the two magnetic legs (6, 7) are each provided with a magnetic reinforcing layer (15 or 16) up to the region of their pole end pieces (8 or 9), these reinforcing layers (15, 16) forming the corresponding outer sides of the magnetic conductive body (5).

3. A magnetic head according to claim 1 or 2, characterised in that the magnetic leg (7), which is turned towards the substrate (3) and whose leg part (7a) runs through the depression (13), together with the turns (18) of the writing/reading coil winding, which are embedded into an insulating material, form a common outer surface which is at least approximately even and on which the more distant magnetic leg (6), distanced by means of a insulating layer (22), is arranged.

4. A magnetic head according to one of claims 1 to 3, characterised in that the substrate (3) comprises $Al_2O_3$-TiC or AlN.

5. A magnetic head according to one of claims 1 to 4, characterised in that its magnetic conductive body (5), which conducts the magnetic flux, comprises a soft magnetic material.

6. A magnetic head according to one of claims 1 to 5, characterised in that its magnetic conductive body (5), which conducts the magnetic flux, consists of a material whose easy magnetization is directed at least substantially perpendicularly to the conductive direction of the magnetic flux.

## Revendications

1. Tête magnétique à couches minces pour un support d'enregistrement devant être aimanté perpendiculairement (verticalement) et comportant un corps de guidage magnétique qui guide le flux magnétique, est déposé sur un substrat amagnétique, possède la forme d'une tête annulaire et contient deux branches magnétiques, dont les pièces polaires terminales, tournées vers le support d'enregistrement, sont disposées l'une derrière l'autre dans la direction de déplacement de la tête en étant séparées l'une de l'autre par une fente possédant une faible largeur prédéterminée, et qui comportent des parties dont la distance réciproque est supérieure à la largeur de la fente et qui limitent un espace intercalaire à l'intérieur duquel s'étendent les spires d'un enroulement d'une bobine d'enregistrement/lecture, caractérisée par le fait que le substrat (3) comporte un renforcement (13) dans lequel sont disposés, pour leur majeure partie, l'élément (7a) de la seconde branche magnétique (7), qui est plus éloignée de la première branche (6), ainsi que les spires (18) de l'enroulement de la bobine d'enregistrement/lecture.

2. Tête magnétique suivant la revendication 1, caractérisée par le fait que les deux branches magnétiques (6, 7) sont munies, en dehors de la région de leurs pièces polaires terminales (8 ou 9), d'une couche de renforcement magnétique (15 ou 16), ces couches de renforcement (15, 16) délimitant les faces extérieures correspondantes du corps de guidage magnétique (5).

3. Tête magnétique suivant la revendication 1 ou 2, caractérisée par le fait que la branche magnétique (7), qui est tournée vers le substrat (3) et comporte la partie (7a) de branche qui s'étend dans le renforcement (13), forme, en association avec les spires (18) de l'enroulement de la bobine d'enregistrement/lecture, noyées dans un matériau isolant, au moins approximativement une surface extérieure plane commune, sur laquelle la seconde branche magnétique (6) est disposée, en en étant séparée par une couche isolante (22).

4. Tête magnétique suivant l'une des revendications 1 à 3, caractérisée par le fait que le substrat (3) est constitué par du $Al_2O_3$-TiC ou par du AlN.

5. Tête magnétique suivant l'une des revendications 1 à 4, caractérisée par le fait que son corps de guidage magnétique (5), qui guide le flux magnétique, est réalisé en un matériau magnétique doux.

6. Tête magnétique suivant l'une des revendications 1 à 5, caractérisée par le fait que son corps de guidage magnétique (5), qui guide le flux magnétique, est réalisé en un matériau dont l'aimantation facile est dirigée au moins dans une large mesure perpendiculairement à la direction de guidage du flux magnétique.